# EUROPÄISCHE PATENTANMELDUNG

(11) **EP 1 043 540 A2**
(43) Veröffentlichungstag der Anmeldung: **11.10.2000**
(21) Anmeldenummer: 00106672.9
(22) Anmeldetag: 29.03.2000
(51) Int. Cl.: F17C 5/06, F17C 13/02

(54) **Abfüllstand zur Herstellung von Präzisionsgasgemischen**

(30) Priorität: 08.04.1999 DE 19915779
(71) Anmelder: MESSER GRIESHEIM GMBH, 60547 Frankfurt (DE)
(72) Erfinder: Klebe, Ulrich, 47647 Kerken (DE); Pongraz, Johann, 47259 Duisburg (DE)

(57) **Zusammenfassung**

Der Gasabfüllstand enthält mindestens einen Meßgasbehälter 12, der parallel zu den zu befüllenden Druckgasflaschen 10, 11 angeordnet ist. Der Gasabfüllstand enthält ferner steuerbare Absperrorgane 3, 4, 21, 22 und eine Steuer- und Überwachungseinheit 20, insbesondere eine Gasdosiereinheit 6, die mindestens zwei Auf-/Zu-Ventile 21, 22 aufweist. Vorteilhaft enthält der Gasabfüllstand eine Wägeeinrichtung 13 mit horizontal angeordnetem Füllschlauch 32. Vorteilhaft enthält der Gasabfüllstand auch mindestens zwei Meßgasbehälter 12, 12' verschiedener Art oder Größe, die je nach Art der zu befüllenden Druckgasflaschen 10, 11 umgeschaltet werden können, so daß gleichartige Druckgasflaschen für die Messungen und die Produktgasabfüllung eingesetzt werden.

## Beschreibung

Die Erfindung betrifft einen Gasabfüllstand für manometrische und/oder gravimetrische Verfahren und ein Verfahren zur manometrischen Dosierung von Gasen.

Gasgemische werden am häufigsten mittels des manometrischen Verfahrens hergestellt. Diese Verfahren werden in dem Sonderdruck 23/94 aus "Berichte aus Technik und Wissenschaft" Ausgabe 69/1993 "Prüfgase- Präzisionsgemische zum Kalibrieren von Meßgeräten" von Dr. K. Wilde und K. Studtrucker, Firma Linde - Technische Gase, beschrieben.

Das manometrische Verfahren beruht auf der Messung der Druckänderung nach Zugabe der einzelnen Gaskomponenten. Um die gewünschte Zusammensetzung der Gasmischung zu erreichen, werden die Gaskomponenten nacheinander bis zu einem definierten Druck in die Druckgasflasche gefüllt. Aufgrund von Druckabfällen bei Verengungen im Gasleitungsweg, insbesondere am Gasflaschenventil, kann der gemessene Druck von dem Druck in der Gasflasche erheblich abweichen. Eine präzise Druckmessung während der Gasabfüllung ist daher nicht mit der gewünschten Zuverlässigkeit möglich.

Die Herstellung von Präzisionsgasgemischen erfordert eine große Anzahl von Handgriffen, zum Beispiel Entlastung von Druckgasflaschen am Abfüllstand, Spül-und Konditionierschritte der Druckgasflaschen, Vordosieren, mehrere Gaskomponenten wechseln mit Entlastungs- und Konditionierschritten, exaktes, feinfühliges Gasdosieren und viele andere. Hierzu sind eine Vielzahl von manuellen Ventilbetätigungen notwendig. Dabei ist die Reihenfolge der manuellen Ventilbetätigungen exakt einzuhalten und zu kontrollieren. Bei den vielen Handgriffen im Prozeß spielt die exakte Einhaltung der Reihenfolge der Betätigungen eine große Rolle, die jeweils für den Prozeß exakt eingehalten werden müssen. Dabei ist gleichzeitig die Leitungswegschaltung des Füllstandes zu beachten, die Dosierung muß äußerst feinfühlig und präzise erfolgen, wobei die Sollgrößen des Prozesses exakt getroffen werden müssen. Diese manuellen Verfahren sind sehr zeit-, arbeits- und kostenintensiv. Zudem besteht bei der Vielzahl der manuellen Verfahrensschritte eine große Fehlermöglichkeit.

Der Erfindung liegt die Aufgabe zugrunde, einen Gasabfüllstand und ein Verfahren zu schaffen, die zuverlässiger und wirtschaftlicher arbeiten und die oben genannten Probleme vermeiden.

Gelöst wurde die Aufgabe durch einen Gasabfüllstand mit den in Anspruch 1 angegebenen Merkmalen und ein Gasabfüllverfahren gemäß Anspruch 12.

Der Gasabfüllstand dient zum Befüllen von Druckgasbehältern wie Druckgasflaschen, Druckdosen oder anderen Gasbehältern mit einem oder mehreren Gasen. Vorzugsweise werden Druckgasflaschen befüllt.

Der Gasabfüllstand ist vorzugsweise für ein manometrisches Gasabfüllverfahren ausgelegt. Vorteilhaft ist der Gasabfüllstand so beschaffen, daß ein kombiniertes Verfahren aus manometrischem und gravimetrischem Verfahren durchgeführt werden kann. Der gravimetrische Teil des Verfahrens dient beispielsweise zur Kontrolle der Füllmenge der Hauptgaskomponente bei der Herstellung von Gasgemischen. Der Gasabfüllstand enthält besonders vorteilhaft mindestens einen Meßgasbehälter für die Messung von Druck (anhand von einem oder mehreren Drucksensoren) und/oder Temperatur (anhand von einem oder mehreren Temperatursensoren) und gegebenenfalls eine Analyseeinrichtung (Analysegerät) zur Bestimmung der Gasgemischzusammensetzung. Besonders bevorzugt ist der Gasabfüllstand für eine teilweise oder vollständig automatisierte Gasabfüllung, insbesondere Gasgemischherstellung, ausgelegt.

Durch den Einsatz des Meßgasbehälters mit Sensoren und vorzugsweise Analyseeinrichtung in dem Gasabfüllstand ist es erstmals möglich die Gasabfüllung oder Gasgemischherstellung durch online verfügbare, unverfälschte Meßwerte und/oder Analysenwerte, wie temperaturkompensierte Druckerfassung (in Echtzeit in der Druckgasflasche) und Gaszusammensetzung, zu steuern.

Der automatisierte oder teilautomatisierte Gasabfüllstand enthält eine Steuerung (Steuereinheit) und steuerbare Absperrorgane wie Pneumatikventile im Gaseweg. Mit Hilfe einer Steuereinheit wird der Ablauf der Verfahrensschritte von Gasabfüllung und Gasgemischherstellung überwacht und gesteuert. Vorteilhaft ist die Steuereinheit mit einer Datenbank gekoppelt, von der gasartspezifische Daten und Verfahrensparameter, insbesondere Parametersätze, übernommen werden. Der Gasabfüllstand enthält vorzugsweise mindestens eine Leseeinrichtung zur Übernahme von Daten von einem Datenträger an den Druckgasflaschen. Der Datenträger ist beispielsweise eine Barcode-Kennzeichnung (z. B. Barcode-Etikett) oder ein elektronischer Datenträger (z. B. Transponder-Einheit) an der Druckgasflasche und enthält gasflaschenspezifische und vorteilhaft gasartspezifische Daten (z. B. Gasgemischzusammensetzung). Diese von der Leseeinrichtung von den Druckgasflaschen übernommenen Daten werden besonders vorteilhaft an die Steuereinheit und insbesondere an eine Datenbank (z. B. im Produktionsbüro) übermittelt. Besonders bevorzugt ist der Gasabfüllstand so gestaltet, daß ein Datenaustausch zwischen Steuereinheit und Datenbank erfolgen kann, das heißt Steuereinheit und Datenbank sind vorteilhaft gekoppelt.

Ein Verfahren zur Datenübernahme oder zum Datenaustausch mittels einer Transpondereinheit an Druckgasflaschen wird in DE 195 40 595 A1 (interne Bezeichnung MG 1968) beschrieben, worauf hiermit bezug genommen wird.

Bei manometrischen Gasabfüllverfahren oder Verfahren zur Herstellung von Gasgemischen, die im folgenden als manometrische Verfahren bezeichnet werden, werden die Gasmengen mindestens eines Gases oder einer Gaskomponente mittels Druckmessung erfaßt und dosiert. Sehr vorteilhaft wird als manometrisches Verfahren ein manometrisches Vakuumdosierverfahren verwendet, das in DE 197 04 868 C1 (interne Bezeichnung MG 2029) beschrieben ist und worauf hiermit bezug genommen wird.

Bei dem manometrischen Verfahren wird besonders vorteilhaft ein Meßgasbehälter eingesetzt, der eine korrekte Druckmessung während der Gasabfüllung und Gasdosierung ermöglicht. Der Meßgasbehälter ist ein modifizierter Druckgasbehälter, insbesondere eine Druckgasflasche, z. B. eine handelsübliche Druckgasflasche mit 50, 40, 20, 10, 5, 2, 1 oder 0,5 Liter Flaschenvolumen, die mit einer oder mehreren Öffnungen neben der Öffnung für das Flaschenventil, z. B. am Flaschenkörper (Flaschenzylinder), versehen ist. Die Öffnungen dienen zur Aufnahme oder zum Anschluß von z. B. Ventilen, Temperaturfühlern, Adaptern, Druckaufnehmern oder Manometern. Der Meßgasbehälter wird vorzugsweise im Niederdruckbereich eingesetzt, das heißt z. B. im Bereich von 0,0001 bis 1 bar oder im Druckbereich von 0,0001 bis 20 bar. Auch im Hochdruckbereich, z. B. 20 bis 350 bar, ist der Einsatz von modifizierten Druckgasflaschen unter entsprechenden Sicherheitsvorkehrungen möglich.

Der Meßgasbehälter wird im Gasabfüllstand vorteilhaft parallel zu anderen Druckgasbehältern, das sind in der Regel zu befüllende Druckgasflaschen, angeschlossen. Besonders vorteilhaft ist, wenn der Meßgasbehälter aus einem Druckgasbehälter hergestellt wird, der den parallel angeschlossenen Druckgasbehältern, das heißt den zu befüllenden Druckgasbehältern (auch Produktgasflaschen genannt), in Größe und Beschaffenheit entspricht. Meßgasbehälter und zu befüllende Druckgasbehälter werden in dem Gasabfüllstand in der Regel strömungssymmetrisch angeschlossen. Bei Gleichartigkeit der Behälter herrschen dann in dem Meßgasbehälter die gleichen Bedingungen wie in den Druckgasbehältern der Gasabfüllung. Der Zustand in dem Meßgasbehälter spiegelt damit den Zustand in Echtzeit in allen zu befüllenden Druckgasflaschen in allen Befüllungsstadien wieder. Der Meßgasbehälter ist problemlos in einen üblichen Gasabfüllstand integrierbar.

Der Meßgasbehälter eignet sich beispielsweise zur Messung von Druck und/oder Temperatur. Durch mehrere Öffnungen mit Anschlüssen für Temperaturfühler, die in die Druckgasflasche hineinreichen und z. B. entlang der Längsachse des Meßgasbehälters angeordnet sind, kann z. B. ein Temperaturgradient, der bei der Gasabfüllung entstehen kann, ermittelt werden. Temperaturmeßfühler (z. B. Thermoelemente) dienen z. B. zur Erfassung von Temperaturprofilen an oder in der Druckgasflasche. Insbesondere kann die Gastemperatur direkt gemessen werden.

Öffnungen des Meßgasbehälters können auch zur Gasentnahme für Analysezwecke eingesetzt werden, z. B. in Verbindung mit Hochdruckdosierventilen oder Absperrventilen. Anhand mehrerer Öffnungen, z. B. entlang der Längsachse des Meßgasbehälters, kann die örtliche Gaszusammensetzung bestimmt werden, insbesondere zur Prüfung der Homogenität von Gasgemischen oder zur Ermittlung von Gasschichtungen bei der Gasgemischherstellung. Die Gaszusammenensetzung kann anhand von entnommenen Gasproben oder online ermittelt werden.

Der Gasabfüllstand enthält eine (z. B. zentrale Analyseeinrichtung) oder mehrere Analyseeinrichtungen. Eingesetzte Analyseverfahren sind z. B. Massenspektrometrie oder Infrarotspektroskopie, insbesondere FT-IR-Spektroskopie. Die Analyse kann eine, mehrere oder alle Gaskomponenten umfassen. Vorteilhaft ist der Gasabfüllstand so beschaffen, daß eine Probenahme und online-Gasanalyse aus der Gasverbindungsleitung zu den Druckgasflaschen und aus dem Meßgasbehälter erfolgen kann. Besonders vorteilhaft enthält der Gasabfüllstand eine Analyseeinrichtung für die online-Analyse der Gaszusammensetzung in der fertig befüllten Druckgasflasche vorzugsweise für die Endkontrolle. Die Analyseeinrichtung (eine, mehrere oder alle) sind vorzugsweise mit der Steuereinheit gekoppelt, so daß die online ermittelten Analyseergebnisse zur Steuerung des Gasabfüllprozesses direkt genutzt werden können.

Eine oder mehrere Öffnungen des Meßgasbehälters können auch zur Aufnahme von Sonden zur Untersuchung der Innenoberfläche von Druckgasbehältern dienen (z. B. Endoskop; spektroskopische Oberflächenuntersuchungen; Gasanalysen mittels Massenspektrometrie). Beispielsweise können Adsorptions- und Desorptionsvorgänge zur Qualitätskontrolle erfaßt werden (z. B. Änderung der Gaszusammensetzung anhand Massenspektrometrie).

Bevorzugt sind die Öffnungen in der Druckgasbehälterwand des Meßgasbehälters mit einem Gewinde versehen, z. B. konische Gewinde wie NPT 1/16 Zoll bis NPT ¼ Zoll. 1/16 und ¼ Zoll-Gewinde können z. B. bei mindestens 5 mm Wanddicke angebracht werden. Gewindeöffnungen sind für den Einsatz im Hochdruckbereich besonders geeignet. Gelötete oder geschweißte Anschlüsse werden im allgemeinen im Niederdruckbereich (z. B. bei dünnwandigen Behältern wie Druckdosen) eingesetzt.

Der Meßgasbehälter ist besonders vorteilhaft einsetzbar für eine präzise Druckmessung bei manometrischen Verfahren zur Herstellung von Gasgemischen. Insbesondere bei Gasdosierverfahren mit Partialdruckmessung, z. B. für Drücke unterhalb von 1000 mbar, sorgt der Meßgasbehälter mit Druckmeßeinrichtung für exakte und übertragbare Meßwerte für die Druckgasbehälter bei der Gasabfüllung. Beispielsweise bei der direkten Herstellung von Prüfgasgemischen mit einer Nebenkomponente im Spurenbereich muß der Partialdruck der Nebenkomponente in den Druckgasbehältern präzise bestimmt werden.

Üblicherweise sind die Vakuummeßröhren an den Abfüllständen relativ nahe im Ansaugbereich der Vakuumpumpen angeordnet (Überdruckmeßgeräte befinden sich in der Regel im Abfüllrohrleitungssystem). Hierbei wird der Druck in der Druckgasflasche nicht ausreichend genau gemessen. Dieses Problem wird mit dem parallel zu den zu befüllenden Druckgasbehältern (Produkt-Druckgasflaschen) angeschlossenen Meßgasbehälter ("Dummy-Flasche") gelöst, der bevorzugt mit einer oder mehreren gasartunabhängigen Absolutdruckmeßröhren ausgerüstet ist und damit den realen Druck in jeder Druckgasflasche wiedergibt. Zum Schutz der Vakuummeßröhren bei der Herstellung von Hochdruckgasgemischen kann entweder der Meßgasbehälter von der Abfüll-Gasleitung abgesperrt werden oder es kann ein Absperrventil zwischen Meßgasbehälter und Meßgerät angebracht werden, das geschlossen wird, sobald der zulässige Meßdruckbereich überschritten wird. Es kann von Vorteil sein, mehrere Meßgasbehälter einzusetzen, z. B. ein Meßgasbehälter zur Messung im Niederdruckbereich und ein Meßgasbehälter im Mittel- und Hochdruckbereich.

Die überlicherweise eingesetzten Vakuummeßröhren, z. B. Thermovac, Pirani-oder Penning-Meßröhren besitzen aufgrund des Meßprinzips eine stark gasartabhängige Druckmessung. Hinzu kommt, daß die Druckanzeige bei diesen Meßgeräten nicht linear ist. In Verbindung mit dem Meßgasbehälter werden Meßsysteme bevorzugt, die eine gasartunabhängige, absolute Druckmessung erlauben. Eine gasartunabhängige, absolute Druckmessung kann beispielsweise mit Druckmeßgeräten wie Kapazitätsmanometern (z. B. Gerät mit der Bezeichnung 600 Barocel® der Firma Edwards, USA; Meßbereiche: 0-10, 0-100, 0-1000 mbar) erfolgen. Bei diesen Kapazitätsmanometern lenkt der Eingangsdruck eine dünne, radial im Gehäuse eingeschweißte Membrane gegenüber einer festen Elektrode aus, dabei bilden beide Elektroden einen Kondensator. Dies führt zu einer Kapazitätsänderung, die nach elektronischer Signalverarbeitung über die Steuer-und Anzeigeelektronik direkt proportional zum Druck ist. Als Ausgangssignal wird eine lineare Gleichspannung geliefert. Die Bezugselektrode befindet sich in einem Referenz-Ultrahochvakuumraum, der durch chemische Getter langzeitstabil ist. Gasartunabhängige Meßröhren zur kapazitiven Messung sind für Drücke von beispielsweise 0,0001 mbar bis 1000 mbar erhältlich.

Sehr vorteilhaft enthält der Gasabfüllstand eine Umschalteinheit zwischen zwei oder mehreren Meßgasbehältern verschiedener Größe. Dadurch ist kein Umbau des Gasabfüllstandes bei Änderung der Größe oder Art der zu befüllenden Druckgasflaschen erforderlich. Das Umschalten zum Meßgasbehälter der gewünschten Größe erfolgt vorzugsweise über die Steuereinheit des Gasabfüllstandes. Besonders vorteilhaft können mehrere Meßgasbehälter unterschiedlicher Größe mit einer Sensor-, Meß- oder Analyseeinrichtung gekoppelt sein, die über Ventile in den Gasanschlußleitungen zwischen den Meßgasbehältern entsprechend geschaltet werden können. Z. B. ist eine Druckmeßeinheit über mit Ventilen ausgestatteten Gasleitungen mit den einzelnen Meßgasbehältern verbunden. Je nach Größe der Druckgasflaschen (Produktgasflaschen), die befüllt werden, wird ein Meßgasbehälter entsprechender Größe mit der Druckmeßeinheit verbunden, wobei z. B. ein Druckmeßgerät für den Bereich 0 bis 1 bar (Niederdruckbereich) oder ein Druckmeßgerät für den Bereich 1 bis 300 bar (Hochdruckbereich) durch eine entsprechende Schaltung der Ventile angeschlossen ist, das heißt mit dem entsprechenden Meßgasbehälter direkt verbunden ist. Durch diese Umschalteinheit können auf einfache Weise mit einer Druckmeßeinheit mehrere Meßgasbehälter alternativ eingesetzt werden, ohne daß Meßgasbehälter bei Änderung der Größe der Produktgasflaschen ausgetauscht und neu installiert werden müssen. Die Umschalteinheit der Meßgasbehälter bringt also den Vorteil einer höheren Flexibilität des Gasabfüllstandes und gestattet bei Verwendung gesteuerter Ventile eine automatische Anpassung an die Größe der Produktgasflaschen. Darüberhinaus können mehrere Meßgasbehälter mit einer Druckmeßeinheit betrieben werden, statt einer Meßeinheit pro Meßgasbehälter.

Der automatische Gasabfüllstand enthält vorzugsweise die Bestandteile: eine Druckgasquelle für Haupt- und Nebengaskomponenten im Hoch- und Niederdruckbereich, geeignete Rohrleitungsführung für den Prozeß, pneumatisch betriebene Auf-/Zu-Gasventile, einen oder mehrere Meßgasbehälter zur Meßwertaufnahme der relevanten Parameter (Druck und Temperatur, ggf. Analysengeräte), eine Steuereinheit und pneumatische Gas-Regelorgane einschließlich der Druckluftversorgung für die Pneumatik. Vorteilhaft sind die Druckgasquellen mit einem Druckmeßaufnehmer zur Füllstandskontrolle, z. B. über die Erfassung des Druckgasflaschendruckes (Vordruck; z. B. am Druckminderer), versehen. In der Regel enthält der Abfüllstand eine Vakuumversorgung. Zur Vakuumerzeugung dient in der Regel eine Vakuumpumpe. Vorteilhaft enthält der Abfüllstand eine Analyseneinrichtung zur Bestimmung der Gaszusammensetzung der fertigen Gemische am Abfüllstand und der Gemischzusammensetzung während der Herstellung. Analyseeinrichtungen umfassen beispielsweise mindestens eine Gasprobeentnahmestelle und/oder mindestens ein Analysegerät wie Massenspektrometer, Gaschromatograph (z. B. für eine breitbandige Analyse) oder Infrarotspektrometer (z. B. für ein Monitoring einer einzelnen Gaskomponente). Der Abfüllstand enthält vorteilhaft und besonders bevorzugt eine Wägeeinrichtung zur gravimetrischen Füllmengenkontrolle/-Dosierung von Gas oder Gaskomponenten. Vorteilhaft sind im Gasleitungssystem zusätzliche Druckaufnehmer enthalten (zum Beispiel zur Kontrolle der Gas-Haupt- und Gas-Nebenkomponenteneinspeisung; Gasquellen). Besonders vorteilhaft arbeitet der Abfüllstand, insbesondere die Steuerung des Abfüllstandes, mit einer Leseeinrichtung für Flaschenkennzeichnungsdatenträger an Druckgasflaschen, zum Beispiel für elektronische Datenträger wie Transponder oder für Barcode-Kennzeichnung. Zum Beispiel mit Hilfe einer automatischen Leseeinrichtung für Druckgasflaschen mit elektronischem Datenträger, einer Steuereinheit und der Meßgasbehälter kann die Herstellung von Gasgemischen im Abfüllstand vollständig automatisiert werden.

Der Füllstand enthält vorteilhaft mechanische Sicherheitseinrichtungen wie Rückschlag- und Abblaseventile.

Die Steuerung des Abfüllstandes erlaubt eine automatische Einstellung/Auswahl der prozessrelevanten Gasleitungswege.

Der Abfüllstand ist ausgelegt für die Herstellung für ein breites Spektrum von Gasgemischtypen, z. B. bezüglich des Konzentrationsbereiches (ppm- bis Prozentbereich) oder Gemischtypen (z. B. Mehrkomponenten-Gemische aus den angeschlossenen Gasarten als Haupt- und Nebenkomponenten). Hieraus ergibt sich der Vorteil, daß die Investition des Abfüllstandes durch optimale Auslastung sehr wirtschaftlich ist und sehr flexibel auf Kundenaufträge reagiert werden kann.

Das automatisierte Verfahren der Gasabfüllung oder Gasgemischherstelluing umfaßt in der Regel folgende Teilprozeßschritte:
Anschluß der Druckgasflaschen mit Dichtheitsprüfung und Druckaufbau, eine sogenannte Kaltkonditionierung der Druckgasflaschen zur Konditionierung der inneren Oberfläche und gasartspezifischen Konditionierung, einen Dosiervorgang einer oder mehrerer Gasnebenkomponenten, einen Gasspülvorgang bei Komponentenwechsel der Gashauptkomponente oder Gasnebenkomponente, Dosiervorgänge (z. B. der Dosiervorgang der Gashauptkomponente im Hochdruckbereich), Druckgasflaschenabschluß- und - entlastungsvorgänge, einen Gasabfüllstandkonservierungszyklus, eine Meßgasbehälterkonditionierung, Dichtheitsüberprüfungsroutinen des gesamten Gasabfüllstandes.

Das Steuerungsprogramm für den Gasabfüllstand enthält vorteilhaft sogenannte Makros. Über solche Makros können z. B. einzelne Teilprozeßschritte automatisch gefahren werden.

Die Erfindung wird anhand der Zeichnung erläutert.

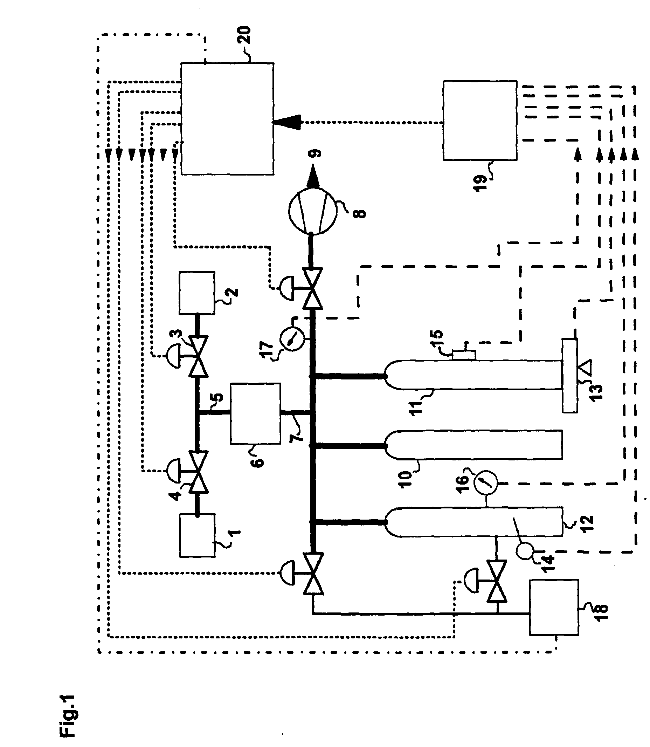

Fig. 1 zeigt ein vereinfachtes Schema des automatisierten Gasabfüllstandes zur Gasgemischherstellung.

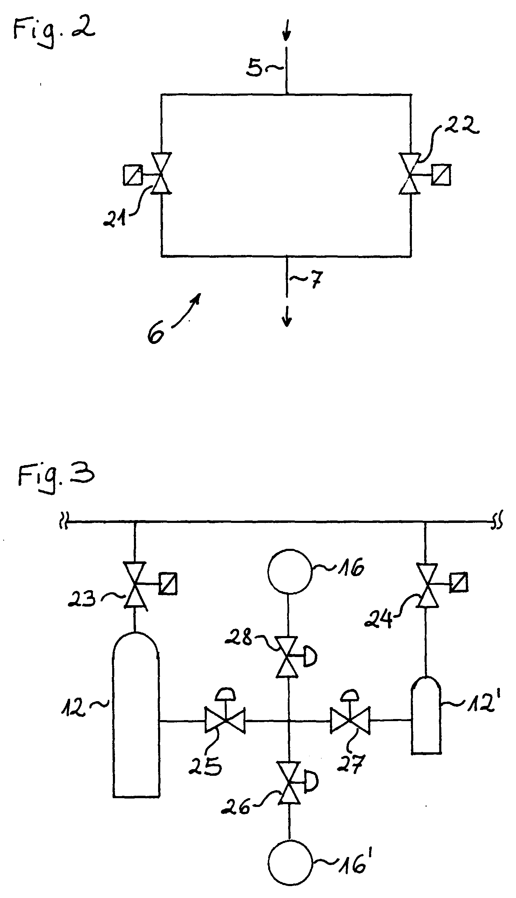

Das vereinfachte Schema in Fig. 1 zeigt nicht alle Absperr- und Steuerventile des Gasabfüllstandes, da der Fachmann weiß, wo in den Gasleitungen für eine gewünschte Funktion Ventile anzuordnen sind. Stellvertretend für eine oder mehrere Gasquellen werden als Beispiel zwei Gasquellen 1 und 2 gezeigt. Von der Gasquelle 1 wird beispielweise die Gashauptkomponente (oder mehrere Gashauptkomponenten; Gaskomponenten mit größtern Mengenanteil des Gasgemisches) und von der Gasquelle 2 die Gasnebenkomponente (oder mehrere Gasnebenkomponenten) in die Gasleitung eingespeist. Die Gasnebenkomponenten können über eine oder mehrere Druckgasflaschen eingespeist werden. Die Gashauptkomponente oder Hauptkomponenten werden in der Regel aus einer zentralen Gaseversorgung eingespeist. Von der Gasquelle 1, 2 gelangen die Gase über eine Rohrleitung zu den Absperrventilen 3 und 4, von dort über die Gasleitung 5 zur Dosiereinheit 6 (z. B. Dosierventil oder Dosiereinheit wie in Fig. 2). Von der Dosiereinheit 6 führt eine Gasleitung 7 zum "Abfüllrechen". Der sogenannte Abfüllrechen ist eine Verzweigung der Gasleitung, an dem die zu befüllenden Druckgasflaschen (Produktgasflaschen) in der Regel über Anschlußschläuche angeschlossen werden. Stellvertretend für die Produktgasflaschen werden die Produktgasflaschen 10 und 11 gezeigt. Produktgasflasche 11 steht auf der Wägeeinrichtung (Waage) 13. Die Waage 13 dient zur gravimetrischen Füllstandskontrolle, in der Regel bei der Abfüllung der Hauptgaskomponente. Der Abfüllstand enthält vorteilhaft eine Einrichtung zur Datenübernahme (genannt Leseeinrichtung), insbesondere zum Lesen druckgasflaschenspezifischer Daten von einem Datenträger an den Druckgasflaschen. Die Druckgasflaschen sind vorzugsweise mit einem elektronischen Datenträger, z. B. Transponder, ausgerüstet. Vorteilhaft auch deren Position. Ausgehend von den druckgasflaschenspezifischen Daten werden in der Steuereinheit entsprechende Programme aufgerufen. Das Lesegerät ist in der Regel mit der Steuer- und Überwachungseinheit 20 verbunden. Die Steuereinheit 20 erhält von dem Meßwertaufnehmer 19 (z. B. ein AD-Wandler) prozeßrelevante Daten wie Druck und Temperatur von den Meßeinrichtungen (z. B. 14, 15, 16, 17, 18) während des Prozesses. Die Steuereinheit 20 dient vorzugsweise zur Steuerung aller Prozeßschritte der Gasabfüllung oder Gasgemischherstellung. Die Steuereinheit 20 erhält z. B. vom Lesegerät, per Handeingabe und/oder von einer Produktdatenbank, die vorzugsweise mit der Steuereinheit 20 online verbunden ist, einen Parametersatz. Der Parametersatz enthält beispielsweise die Druckgasflaschengröße und die herzustellende Gemischzusammensetzung, dazu welche Nebenkomponenten gefüllt werden, welche Hauptkomponenten gefüllt werden und deren Reihenfolge, außerdem die Parameter für die Konditionierzyklen, nämlich den Evakuierdruck, die Anzahl der Spülzyklen und den Spülgasdruck, die für die jeweilige Gaskonzentration zu wählenden Partialdrucke, die über die Meßgasbehälter 12 gemessen werden. Als nächstes kommt der zu dosierende Hauptkomponentendruck bzw. alternativ dazu bei gravimetrischer Überwachung das zu dosierende Gasgewicht. Aus der Definition der Gasgemischzusammensetzung werden gleichzeitig die einzelnen Verfahrensprozeßschritte abgerufen, die die Steuerung entsprechend aufruft wie zum Beispiel Konditionierzyklen, Spülzyklen, Gasartwechsel und so weiter. Die für die einzelnen Prozeßschritte relevanten Größen werden von z. B. dem Meßgasbehälter 12 und deren Druckmeßaufnehmern 16 oder den Druckaufnehmern 17 im Füllstand über die Meßwertaufnahme 19 (in der Regel Analog-Digital-Wandler) dem Füllstandsrechner in der Steuereinheit 20 zugeführt. Die Steuereinheit 20 stellt über die Regelorgane die entsprechenden Größen ein, so daß alle Prozesse entsprechend auf ihre Sollwerte eingeregelt und eingestellt werden. Der Verfahrensablauf wird vorteilhaft über unterschiedliche Programmpakete für verschiedene Teilprozeßschritte gesteuert.

Figur 2 zeigt schematisch eine bevorzugte Dosiereinheit 6 für die Dosierung von Gasen im Hochdruck, Niederdruck oder im Vakuum. Die gezeigte Dosiereinheit 6 enthält die Ventile 21, 22. Es können aber auch mehr als zwei Ventile eingesetzt werden (z. B. drei oder vier parallel angeordnete Ventile). Die Ventile sind Auf/Zu-Ventile (z. B. Pneumatikventile). Die Ventile 21, 22 sind gleichartig oder unterscheiden sich durch verschiedene Bohrungen (Querschnitte des Gaseweges). Durch Kombination verschiedener Schaltzustände der Ventile 21 und 22, d. h. 21 =Auf/22=Zu, 21=Zu/22= Auf oder 21=Auf/22=Auf, werden unterschiedliche Leitwerte erzeugt. Dadurch ist eine einfache und schnellere Dosierung eines Gases möglich (ohne Hysterese, ohne Einlaufverhalten). Die Dosiereinheit besitzt einen Gaseingang 5 und einen Gasausgang 7.

Fig. 3 zeigt ein Schema einer Umschalteinheit mit zwei Meßgasbehältern 12 und 12'. Durch die gezeigte Anordnung kann durch entsprechende Ansteuerung der Ventile der Meßgasbehälter ausgewählt werden, der der Druckgasflaschengröße der Produktgasflaschen entspricht, z. B. Meßgasbehälter 12 gleich 50 Liter-Behälter und Meßgasbehälter 12' gleich 10 Liter-Behälter. Der Anschluß des richtigen Meßgasbehälters erfolgt ohne Ummontierung eines neuen Meßgasbehälters durch Schaltung der Ventile 23, 24 und 25, 27. Auf diese Weise kann bei Füllung von 50 Liter-Produktgasflaschen ein entsprechender 50 Liter-Meßgasbehälter und bei 10 Liter-Produktgasflaschen ein 10 Liter-Meßgasbehälter geschaltet werden. Über die Ventile 26 und 28 kann die Druckmeßeinrichtung 16 oder 16' zugeschaltet werden, z. B. Druckmeßeinrichtung 16 für einen Niederdruck-Meßbereich und Druckmeßeinrichtung 16' für einen Mitteldruck- oder Hochdruck-Meßbereich. Es werden dabei vorteilhaft unterschiedliche Meßgerätetypen eingesetzt, z. B. empfindliche Niederdruck-Meßgeräte, die durch Hochdruck zerstört werden würden und durch entsprechende Schaltung der Ventile vor Hochdruck geschützt werden.

Die Anordnung mit den Meßgasbehältern 12 und 12' wird vorteilhaft in den Abfüllstand von Fig. 1 integriert (paralleler Anschluß zu den Produktgasflaschen 10, 11).

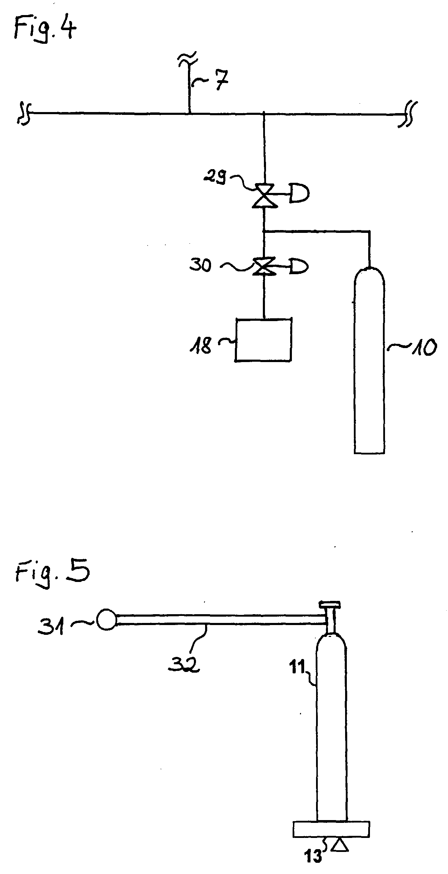

Fig. 4 zeigt eine vorteilhafte Ventilanordnung im Gasweg zur gesteuerten Probeentnahme aus den gefüllten Druckgasflaschen, z. B. der gefüllten Druckgasflasche 10, und Probenzuführung zu einer Analyseeinrichtung 18 für die Endkontrolle bei der Befüllung. Die gezeigte Ventilanordnung ist vorteilhaft in dem Gasfüllstand in Fig. 1 integriert. Bei geöffnetern Ventil 29 und geschlossenem Ventil 30 wird die Druckgasflasche 10 über die Gasleitung 7 befüllt. Nach beendeter Befüllung der Druckgasflasche wird zur Analyse der Gaszusammensetzung für die Endkontrolle Ventil 29 geschlossen und Ventil 30 geöffnet. Von der Druckgasflasche 10 wird über den Gasleitungsweg mit Ventil 30 Gas der Analyseeinrichtung 18 zugeführt. Die Analyseeinrichtung kann eine zentrale Analyseeinrichtung oder eine zusätzliche Analyseeinrichtung sein. Die gezeigte Anordnung gestattet eine vollautomatische Durchführung der Endkontrolle der Gaszusammensetzung in den befüllten Druckgasflaschen.

Fig. 5 zeigt eine Anordnung von einer zu befüllenden Druckgasflasche 11 (Produktgasflasche) auf der Waage 13 (gravimetrische Gasabfüllung), wobei die Druckgasflasche 11 über einen horizontalen, flexiblen Füllschlauch 32 mit dem fest installierten Gasverteilerrohr 31 verbunden ist. Der Füllschlauch hat vorzugsweise den gleichen Innendurchmesser (Leitwert) wie bei den anderen Produktgasflaschen. Damit ergibt sich ein gleiches zeitliches Füllverhalten bei den Druckgasflaschen, was bisher nicht möglich ist. Durch die horizontale Anordnung des Füllschlauches 32 wird eine Verfälschung des Wägeergebnisses durch Druck-oder Biegekräfte, die bei der Druckbeaufschlagung (das heißt bei der Gasabfüllung) entstehen, vermieden. Als Füllschlauch 32 wird beispielsweise ein Edelstahl-Wellschlauch für 200 bar mit einer Nennweite von z. B. 6 mm (z. B. Typ Turboflex, Hersteller: Berghöfer; Kassel) verwendet.

### Bezugszeichenliste

- 1, 2: Gasquelle (Gaskomponenten)
- 3, 4: Absperrorgan
- 5: Gasleitung zur Dosiereinheit
- 6: Dosiereinheit
- 7: Gasleitung zum "Abfüllrechen"
- 8: Vakuumpumpe
- 9: Abgas
- 10, 11: Druckgasflaschen für Produktgas
- 12, 12': Meßgasbehälter
- 13: Wägeeinrichtung
- 14: Innen-Temperaturmeßgerät (im Meßgasbehälter)
- 15: Außen-Temperaturmeßgerät (am Meßgasbehälter)
- 16, 16': Druckmeßgerät (für Druck im Meßgasbehälter)
- 17: Druckmeßgerät (für Druck in der Gasleitung)
- 18: Analyseeinrichtung
- 19: Meßwertaufnahme
- 20: Steuereinheit und Überwachungseinheit
- 21, 22: Absperrorgan
- 23, 24: Absperrorgan
- 25, 26, 27, 28, 29, 30: Absperrorgan
- 31: Gasverteilerrohr
- 32: horizontale Verbindungsleitung (flexibel)

## Patentansprüche

1. Gasabfüllstand, enthaltend mindestens einen Meßgasbehälter (12).

2. Gasabfüllstand nach Anspruch 1, dadurch gekennzeichnet, daß der Gasabfüllstand steuerbare Absperrorgane (3, 4, 21, 22) und eine Steuer- und Überwachungseinheit (20) enthält.

3. Gasabfüllstand nach Anspruch 1 oder 2, dadurch gekennzeichnet, daß der Gasabfüllstand eine Gasdosiereinheit (6) enthält, die mindestens zwei Auf-/Zu-Ventile (21, 22) enthält.

4. Gasabfüllstand nach einem der Ansprüche 1 bis 3, dadurch gekennzeichnet, daß der Gasabfüllstand eine Wägeeinrichtung (13) mit horizontal angeordnetem Füllschlauch (32) enthält.

5. Gasabfüllstand nach einem der Ansprüche 1 bis 4, dadurch gekennzeichnet, daß der Gasabfüllstand mindestens zwei umschaltbare Meßgasbehälter (12, 12') verschiedener Art oder Größe enthält.

6. Gasabfüllstand nach einem der Ansprüche 1 bis 5, dadurch gekennzeichnet, daß an dem Meßgasbehälter (12, 12') eine Druckmeßeinheit (16), eine Temperaturmeßeinheit (14) oder eine Analyseeinrichtung (18) angeordnet ist.

7. Gasabfüllstand nach einem der Ansprüche 1 bis 6, dadurch gekennzeichnet, daß der Gasabfüllstand mindestens zwei umschaltbare Meßgasbehälter (12, 12') enthält, die mit mindestens einer Druckmeßeinheit (16) schaltbar verbunden sind.

8. Gasabfüllstand nach einem der Ansprüche 1 bis 7, dadurch gekennzeichnet, daß der Gasabfüllstand eine Analyseneinrichtung (18) für die Endkontrolle des Gases oder Gasgemisches in den Druckgasflaschen (10, 11) enthält.

9. Gasabfüllstand nach einem der Ansprüche 1 bis 8, dadurch gekennzeichnet, daß die Steuereinheit (20) mit einer Datenbank gekoppelt ist.

10. Gasabfüllstand nach einem der Ansprüche 1 bis 9, dadurch gekennzeichnet, daß der Gasabfüllstand eine Leseeinrichtung für die Übernahme oder Übertragung von Daten eines Datenträgers an Druckgasflaschen aufweist.

11. Gasabfüllstand nach einem der Ansprüche 1 bis 10, dadurch gekennzeichnet, daß der Gasabfüllstand eine Ventilanordnung (29, 30) im Gasweg vor den Druckgasflaschen (10) und einen Gasweg zur Analyseeinrichtung (18) für eine automatische Endkontrolle der Gaszusammensetzung in den fertig befüllten Druckgasflaschen aufweist.

12. Gasabfüllverfahren mit manometrischer Dosierung von einem oder mehreren Gasen, dadurch gekennzeichnet, daß ein Meßgasbehälter (12) zur Druck- und Temperaturerfassung eingesetzt wird.

13. Gasabfüllverfahren nach Anspruch 12, dadurch gekennzeichnet, daß das Verfahren gesteuert durchgeführt wird.
